Europäisches Patentamt

European Patent Office

Office européen des brevets

Publication number: **0 361 925**
**A2**

# EUROPEAN PATENT APPLICATION

Application number: 89309898.8

Int. Cl.5 **H02K 15/03** , **H02K 9/02**

Date of filing: **28.09.89**

Priority: **29.09.88 GB 8822825**

Date of publication of application:
**04.04.90 Bulletin 90/14**

Designated Contracting States:
**DE FR IT NL**

Applicant: **GEC-Marconi Limited**
**The Grove Warren Lane**
**Stanmore Middlesex HA7 4LY(GB)**

Inventor: **Johnson, Frederick Alistair, Dr.**
**Otia Tuta Grassy Lane**
**Seven Oaks Kent TN13 1PL(GB)**

Representative: **Tolfree, Roger Keith et al**
**The General Electric Co. p.l.c. Patent**
**Department GEC-Marconi Research Centre**
**West Hanningfield Road**
**Great Baddow, Chelmsford Essex CM2**
**8HN(GB)**

Electromechanical machines.

It is usual for electric motors of different power outputs to be made of different component parts which makes their production costs high. Cooling in such motors is achieved by the addition of a cooling fan which again adds to the cost of the motor. These problems are resolved by a modular design of motor in which the rotor is used to circulate coolant.

Fig. 1

EP 0 361 925 A2

## Electromechanical Machines

This invention relates to an electromechanical machine

It has been proposed that a certain type of permanent magnet, which has recently become available. could be used in the construction of rotors for electric motors. Traditional design practices would lead to the arrangement of such magnets in a radial formation. This invention arose from a realisation by the inventor that such an arrangement might not make optimum use of the capabilities of the magnets since only those poles facing outwards would contribute to the power output of the motor the effects of the inwardly facing poles being not used.

This invention provides an electromechanical machine comprising: a rotor having a first set of magnetic poles facing in a direction having a component parallel to an axis of rotation of the rotor; and a stator having a second set of magnetic poles arranged to interact with the magnetic poles on the rotor.

Because all the poles of the rotor face in the direction specified each one can be actively used to contribute to the motive power of the machine thereby potentially doubling the output power.

The arrangement of the magnetic poles in accordance with the invention makes it convenient to construct a modular arrangement. A number of identical rotors may be arranged coaxially as may a number of stator assemblies. Such a modular arrangement will allow the construction of a motor of any required power from the necessary number of standard rotor and stator modules, the rotors being linked by suitable linkage means along a common axis.

Having the magnetic poles facing in the direction of the motor axis, rather than radially, allows the use of a reinforcing ring surrounding the magnets and binding them to the rotor without increasing the separation of the poles from the electromagnets. This is another very significant factor in increasing motive power because it allows the rotor speed to be increased to very high values without the risk of disintegration of the rotor.

The fact that the magnetic poles face in the direction of the axis creates an opportunity to use the rotor as a type of vane pump or fan acting so as to draw air, or other, coolant along the rotor axis and then outwardly through specially provided ventilation ducts. In a traditional design such ventilation ducts could not so easily be provided since they would interfere with the positioning of stator windings. Traditionally, therefore, a separate cooling fan would be needed.

A specific embodiment of the invention will now be described, by way of example only, with reference to the accompanying drawings, in which :-

Figure 1 shows a sectional view along the axis of a synchronous motor constructed in accordance with the invention; and

Figure 2 shows an end view of a synchronous motor constructed in accordance with the invention with the end cap removed.

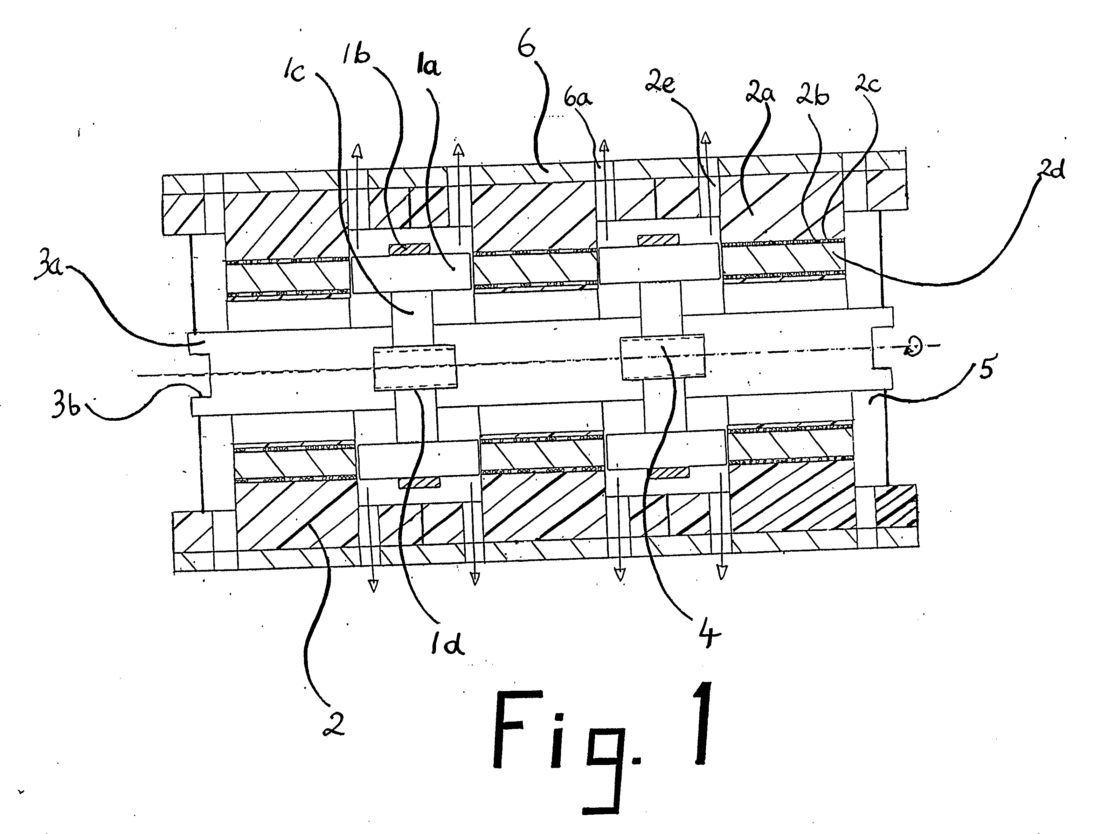

Referring to figure 1, the illustrated synchronous motor has just two rotors but this is simply for the purpose of example and it is emphasised that any other number of rotors, or just a single rotor, can be used in other similar constructions. Whatever the number of rotors, the motor will be constructed from a supply of standard modules: rotor modules 1; stator modules 2; shafts 3; splined linking rods 4; and end caps 5. A reinforcing cylinder 6 of the required length is also included in the illustrated embodiment, though this might advantageously be replaced in other constructions by a two-part casing the parts of which are bolted together to form a cylinder.

Each rotor module 1 comprises permanent magnets 1a held in position by a reinforcing band 1b of carbon reinforced plastics material to a disc like member 1c having a splined hole 1d.

Each stator module 2 comprises: a body 2a of plastics material; a bore 2b in the body 2a; in each bore a stator magnet comprising an electromagnetic coil 2c wound on a soft iron core 2d; a coolant duct 2c; and suitable terminals (not shown) connected to the ends of the coil.

Each shaft 3 comprises a rod-like body 3a with splined sockets 3b at each end shaped to receive splined linking rods 4.

Each end cap 5 defines a bearing in which the rotor is able to rotate and is made of ferromagnetic material to provide a path for magnetic flux between pairs of poles i.e. North and South at the appropriate end of the rotor.

The reinforcing cylinder 6 is of steel with cooling ducts 6a machined in it. The position of these ducts 6a is chosen so as to match the position of the cooling ducts 2c in the stator modules.

Corresponding coils 2c of each stator module are connected together in series or parallel as may be required to meet particular operational requirements using the terminals previously referred to but not shown.

The motor is assembled from these basic modules in the following manner.

The desired size of the motor is calculated from the power requirements. The number of modules is determined and a suitable length of reinforcing cylinder 6 cut from a stock length. An end cap 5 is fixed to the end of the cylinder 6. Next a stator module 2 is slid into the cylinder 6 and the cooling holes aligned. Then a shaft 3 is fitted to a rotor 1 by passing splined linking rod 4 through the rotor disc hole 1d. This rotor sub-assembly is then slid into the cylinder 6 and the shaft aligned with the bearings in the end cap 5 (not shown). A further stator 2 is slid into the cylinder followed by another rotor shaft sub assembly which is linked to the first rotor shaft sub assembly by another splined linking rod 4.

Further stators and rotor shaft sub assemblies are added in this manner until the desired size of motor is achieved. Then a further shaft and stator is placed into the cylinder 6 and another end cap is aligned and fixed in position to provide a bearing and to link flux efficiently between the electromagnets.

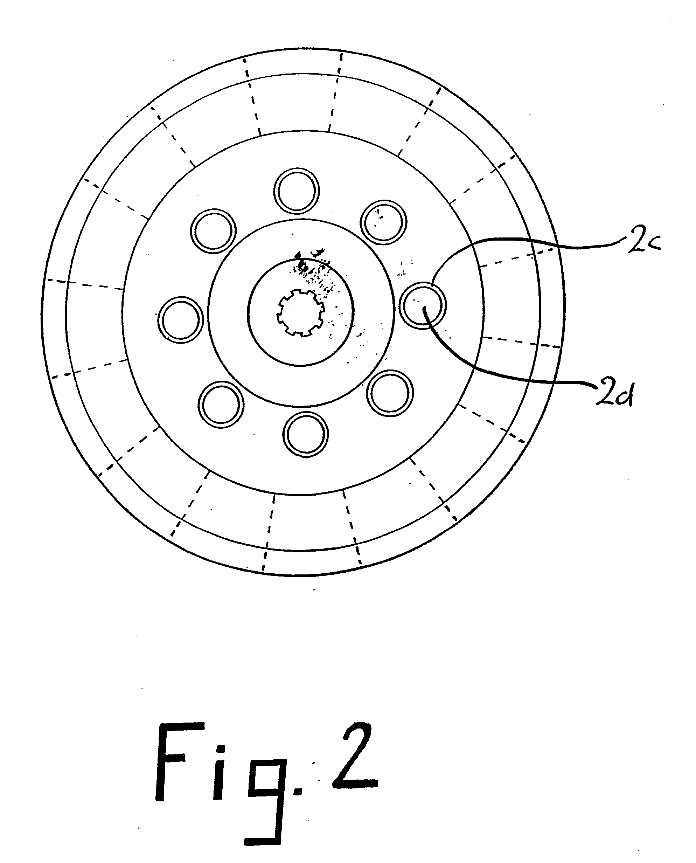

Figure 2 shows that the stator electromagnets comprising coils 2c wound about soft iron cores 2d, are positioned at regular intervals about the stator. In use these electromagnets are fed with a varying electric current to produce a magnetic field that varies with the period of the current. In this way the poles of the electromagnets are made to alternate between North and South and the field can be thought of as progressing about the axis of rotation to cause corresponding rotation of the rotor. Because both poles of the rotor magnets are able to interact with the stator magnets a greater torque is produced than in constructions which do not have that feature.

As the rotor rotates, air is drawn along the shaft and is driven out of the motor via ducts 2e, 6a. In this way the motor is cooled.

It will be appreciated that many variations to the illustrated construction are possible. For example the same machine may be adapted to generate electricity; coolants other than air may be used; the rotor may be shaped to improve the flow of coolant; and, just possibly, the permanent magnets of the rotor may be replaced by electromagnets although that would entail difficulties in creating the necessary electrical connections.

## Claims

1. An electromechanical machine comprising: a rotor (1) having a first set of magnetic poles (1a) facing in a direction having a component parallel to an axis of rotation of the rotor; and a stator (2) having a second set of magnetic poles (2c,2d) arranged to interact with the magnetic poles (1a) on the rotor.

2. A machine according to claim 1 comprising modules each having a rotor (1) constructed as defined in claim 1 and a shaft (3) designed to link the said rotor (1) to a similar rotor of an adjacent module.

3. A machine according to claim 1 or 2 in which a reinforcing band of material (16) extends around a periphery of the or each motor (1).

4. A machine according to any preceding claim including a path for coolant arranged so that rotation of the or each rotor (1) drives the coolant radially along the said path.

# Fig. 1

EP 0 361 925 A2

2c

2d

Fig. 2